# EUROPÄISCHE PATENTANMELDUNG

(11) **EP 0 720 076 A2**
(43) Veröffentlichungstag der Anmeldung: **03.07.1996**
(21) Anmeldenummer: 95810811.0
(22) Anmeldetag: 22.12.1995
(51) Int. Cl.: G05D 1/06, G01P 5/00

(54) **Vorrichtung zur Visualisierung und Zentrierung thermischer und dynamischer Vertikalwinde**

(30) Priorität: 25.12.1994 CH 3943/94
(71) Anmelder: AIRCOTEC AG, CH-6048 Horw (CH)
(72) Erfinder: Porod, Klaus, Dipl.-Ing., A-8114 Stübing (AT)
(74) Vertreter: Arato, Laszlo

(57) **Zusammenfassung**

Es wird eine Vorrichtung und ein Verfahren zur Ermittlung und Anzeige des Windvektors (22, 27, 28), der Fahrt (True Air Speed) eines Luftfahrzeuges (21) und des Geschwindigkeitsvektors der Grundgeschwindigkeit (25a,25b) insbesondere für den Luftsport vorgeschlagen. Im wesentlichen besteht diese Vorrichtung aus einer Einrichtung (1) zur Erzeugung von Signalen, die der geografischen Position und dem Vektor der Grund-Geschwindigkeit entsprechen, einer zweiten Einrichtung (2), wo diese Signale der Grund-Geschwindigkeit als Funktion der Zeit gespeichert werden, einer dritten Einrichtung (3), in der der Betrag des Vektors der Grund-Geschwindigkeit als Funktion des Kurswinkels gespeichert ist, einer vierten Einrichtung (4), zur Verarbeitung der Signale der vorgenannten Einrichtungen (1,2,3), einer fünften Einrichtung (5), zur Steuerung der Signalverarbeitungseinrichtung (4) und einer Einrichtung (6), zur Anzeige der Daten. Die Anzeige der berechneten azimutalen Verteilung des Betrages des Geschwindigkeitsvektors 26, unter Annahme einer mittleren konstanten Fahrtgeschwindigkeit, wie die Wind- und Antiwindrichtung (27,28) ist ebenfalls vorgesehen.

## Beschreibung

Die Erfindung betrifft ein Verfahren zur Ermittlung und Anzeige des Windvektors und der Fahrt eines Luftfahrzeuges nach Anspruch 8 und eine Vorrichtung zur Durchführung des Verfahrens, gemäss der Ansprüche 1 bis 7.

Im Luftsport wird das "Schätzen" für die Beurteilung des Windvektors gelehrt. So sind für den Piloten der Versatz von Rauchschwaden, die Krauselung offener Gewässer, das Wiegen der Gräser, das Zittern des Laubwerks der Bäume und der Zug der Wolken Zeichen ständiger Beobachtung für die Anzeige der Windrichtung und der Windstärke. Für die Quantifizierung dient die Ermittlung des Abdriften des Luftfahrzeuges mit Kursfliegen, Messung der Zeit, Kartenvergleich der Positionen und Berechnung der Windgeschwindigkeit mit Hilfe des Winddreiecks. Neulich ist die Vereinfachung dieses Verfahrens mit Geräten der Satellitennavigation möglich geworden. Die Anwendung dieser Verfahren ist wesentlich einfacher, bedingt jedoch weiterhin das Kursfliegen ohne Rücksicht auf die Auf- und Abwinde und beansprucht während der Messung die Aufmerksammkeit des Piloten stark. Das eigentliche Problem beider Verfahren bleibt; um die Änderungen der Windrichtung oder die Windgeschwindigkeit zu erkennen, ist die Prozedur zu wiederholen.

Es sind zahlreiche Unfälle bekannt, deren Grund die Missachtung des herrschenden Windes, Strömungsabriss der Tragflächen, oder auf die Überforderung der Aufmerksamkeit des Piloten zurückzuführen sind.
Um gefährliche Flugzustände, wie das Absacken und das Abkippen (stall and spin) der Tragfläche wegen Strömungsabriss zu vermeiden ist für den Piloten die Beachtung der Mindestfluggeschwindigkeit, die im Rückenwind entsprechend der Windgeschwindigkeit höher ist (!), von entscheidender Bedeutung. In den meisten Sparten der Fliegerei ist deshalb die Installation eines Fahrtmessers am Luftfahrzeug vorgeschrieben. In der Tuchfliegerei ist die Verwendung von Instrumenten Sache des Piloten, nicht zuletzt deshalb, weil das Anbringen einer Sonde im Vorfeld der Tragfläche umständlich und vor der Kappe eines Gleitschirmes kaum möglich ist. Für die Gleitschirme ist die Verwendung von Flügelrad-Drehzahlmessern (Anemometer) bekannt, die der Pilot herabhängen lässt. Das Einholen des Sensors vor der Landung ist umständlich und die Anzeige beim Pendeln des Schirmes oder im Kurvenflug ungenau. Darum fliegen viele Piloten wie zur Zeit Lilienthals lieber "gefühlsmässig".

Aufgabe der Erfindung ist daher, eine Vorrichtung zu schaffen, die ohne Installation eines Fahrtmessers am Fluggerät, die Richtung und Stärke des Windes permanent und den Betrag der mittleren Fahrtgeschwindigkeit anzeigt.

Die vorliegende Erfindung stellt sich die Aufgabe, die genannten Nachteile zu beseitigen.

Erfindungsgemäss wird diese Aufgabe gelöst durch die kennzeichnenden Merkmale des Anspruchs 1 und 8.

Die durch die Erfindung erreichten Vorteile sind nebst der Erhöhung der Flugsicherheit, dass der Pilot den Einfluss des Windes stets berücksichtigen und darum beispielsweise bei Wettbewerb und Streckenflügen die herrschende Winde berücksichtigen, oder nützen kann. Für diese Informationen, die ständig vorliegen, wird er weder Flugzeit noch Aufmerksamkeit investieren, und auf schleichende Gefahren des Wetters sofort reagieren können.

Im folgenden wird die Erfindung anhand einer Ausführungsweg darstellenden Zeichnungen näher erläutert. Es zeigt:
- Fig. 1: Vorrichtung zur Ermittlung und Anzeige des Windvektors und der Fahrt eines Luftfahrzeuges,
- Fig. 2: das Rechenschema zur Bestimmung und Erfrischung des mittleren Windgeschwindigkeit (Schritte a÷z),
- Fig. 3: die Grund-Geschwindigkeitsvektoren einer Flugminute beim Kreisen im Aufwind (Schritte a÷c),
- Fig. 4: die unregelmässige, kreisähnliche Hüllkurve der gemessenen Grundgeschwindigkeitsvektoren, nach Mittelung mehrerer Einzelvektoren einer Kursrichtung und Ausgleich der Vektorenverteilung durch Interpolation (Schritte e÷h),
- Fig. 5: die Korrektur der Vektoren der Figur 4 auf normierte Fahrtgeschwindigkeit 1,
- Fig. 6: die Winddreiecke für die Ermittlung der Fahrtgeschwindigkeit.

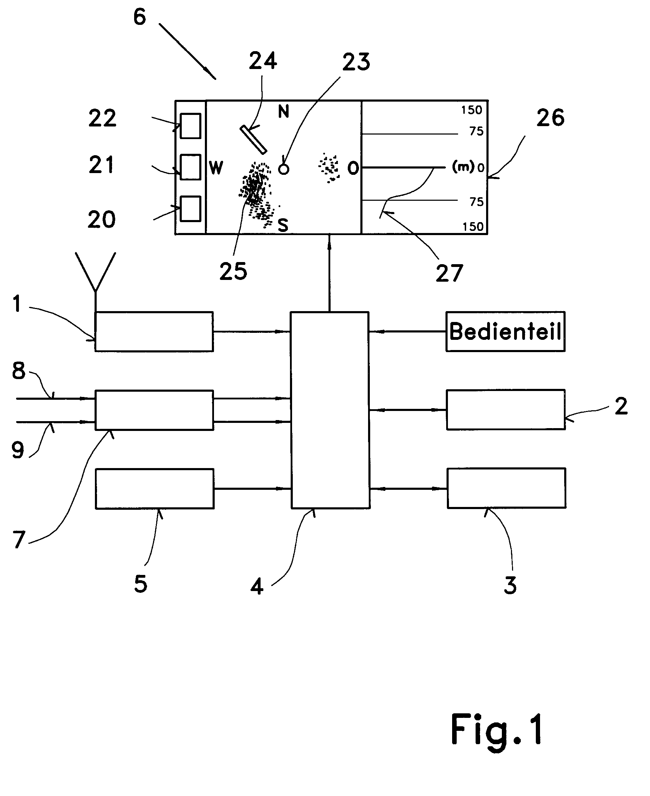

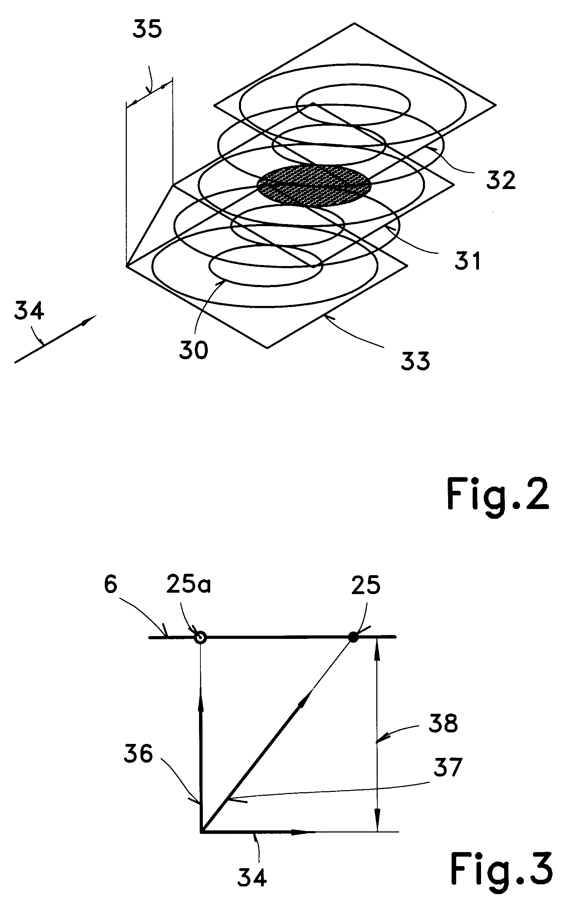

Das in Fig. 1 gezeigte Blockschaltbild der Vorrichtung zur Ermittlung und Anzeige des Windvektors und der Fahrt eines Luftfahrzeuges besteht aus einer Signalverarbeitungseinrichtung 4, einer Steuereinrichtung 5, einer Anzeigeeinrichtung 6, einem Bedienteil und diversen Speichern sowie Ein- und Ausgängen. Zur Erzeugung von Signalen, die der geografischen Position und des Vektors der Grundgeschwindigkeit entsprechen, dient ein Radioempfänger mit Antenne 1. Eine solche marktgängige Einrichtung ist beispielsweise das GPS Modul der Satelliten-Navigation, des Erde umfassenden globale Ortungssystem (NAVSTAR Global Positioning System) des Verteidigungsministeriums der USA, das Daten der Satelliten für die zivile Nutzung zulässt. Die Signale der Positionsermittlungseinrichtung 1, wie die Messwerte des statischen Luftdrucks 8, des Staudrucks 9 gelangen durch die Luftdatenerfassungseinrichtung 7 in die Signalverarbeitungseinrichtung 4, wo sie nach Instruktionen der Steuereinrichtung 5 verarbeitet, in der Anzeigeeinrichtung 6 angezeigt und in den Einrichtungen der Flugdatenerfassung 2 und 3 gespeichert werden. Die Anzeigeeinrichtung 6 weist beispielsweise vier Fenster auf für die digitale Anzeige der Geschwindigkeit über Grund 20, der Fahrtgeschwindigkeit 21, der Windgeschwindigkeit 22 und der barometrischen Höhe 23. Die herrschende Wind- 28 und Antiwindrichtung 27 erscheint im Form von Balken über den gestreckten Kompass-Skala 24. Der aktuelle Geschwindigkeitsvektor über Grund 25 wird mit einem weiteren Balken dargestellt. Die berechnete azimutale Verteilung des Betrages des Geschwindigkeitsvektors 26, unter der Annahme einer mittleren konstanten Fahrt-eschwindigkeit, wird als Abwicklung über der gestreckten Kompass-Skala 24 dargestellt.
Vorteilhafterweise wird die in Figur 1 gezeigte Vorrichtung in ein einziges Gehäuse eingebaut, einschliesslich des Bedienteiles, beispielsweise mit diversen Bedienungstasten und mit einer nicht dargestellten Stromquelle und Befestigungen am Fluggerät oder wenn das Fluggerät ein Gleitschirm ist, bespielsweise am Gurtzeug im Augenhöhe des Piloten.
Die Reihenfolge der wesentlichen Schritte der Bestimmung des mittleren Windvektors Vw aus den Grundgeschwindigkeitsvektoren Vgi(t) mit Betrag Vgi und Kurs K, die als Funktion der Zeit t in der Einrichtung 2 der Figur 1 gespeichert sind, ist im Flussdiagramm der Figur 2 mit der formal mathematischen Erklärung der Schritte (a÷z) dargestellt. Entsprechend der Erfahrung, dass innert kürzerer Zeiträume der segelnde Pilot den Kurs durch Kreisen oder Achtern ständig verändert, liefert das Verfahren, innert wenige Kreise ein gutes Ergebnis, da die Grundgeschwindigkeit Vg in vielen gleichmässig verteilten Flugrichtungen bei näherungsweise konstanter Fahrtgeschwindigkeit VL gemessen werden kann. Auch ohne die Messung der Fahrtgeschwindigkeit VL ist das Verfahren ausreichend genau wenn ein Gleitschirmpilot 90% der Flugzeit 30...40 km/h und ein Delta-Pilot 40...60 km/h schnell fliegt. Entscheidend wichtig ist, dass die starke Streuung der sekündlich gemessenen Rohdaten, die durch Turbulenzen der Aufwinde und bei Gleitschirmen durch zusätzliches "Pendeln" generiert wird, weitgehend durch Mittelwertbildungen kompensiert werden kann.
Figur 3 zeigt einige, beispielsweise mit der Satellitennavigation gemessene, Grundgeschwindigkeitsvektoren einer Flugminute beim Kreisen. Dazu werden alle Vektoren eines Nord orientierten Polarkoordinatensystems dargestellt. Bei Windstille würde die Grundgeschwindigkeit, konstanter Fahrt vorausgesetzt, in alle Himmelsrichtungen gleich sein. Entsprechend wäre die Hüllkurve der ideal gemessenen Vektoren ein Kreis, dessen Mittelpunkt mit den Vektorfusspunkt zusammenfällt. Entsprechend Nord-Nordost-Wind der Figur 3 werden die Grundgeschwindigkeitsvektoren im Figur 4, mit einer Gegenwindkomponente kleiner und die quer zum Wind und mit einer Mitwindkomponente grösser als die Fahrtgeschwindigkeit. Die Hüllkurve im Figur 5 ist wiederum ein Kreis, dessen Mittelpunkt vom Zentrum des Polarkoordinatensystems um den Windvektor verschoben ist.
Für die Berechnung des mittleren Windvektors Vw, entsprechend Figur 2 wird aus der letzten m (1 bis 10) Flugminuten, im Zeitpunkt t=0, mit einer Neuberechnungsrate von beispielsweise 10 Sekunden (a) nach der Start m=1 gesetzt. Im Schritt (b) wird analog der barometrischer Höhe die Windberechnung auf einen Höhenbereich, zwischen Hu und Ho begrenzt. Wenn Beträge der Geschwindigkeitsvektoren als Funktion des Kurses im Azimutsektor dK < dKmax präsent sind, wird im Schritt (d) die Mittelwerbildung zu einem VgMW(K) je Kurs vorgenommen. Wenn die Bedingung (c) als nicht erfüllt gilt, wird die Berechnung (ab "a") wiederholt. Im Schritt (e) wird die Zuordnung der Grundgeschwindigkeitsvektoren für alle Kurse (0...360°) vorgenommen und das Fehlen durch Interpolation ergänzt VgIP(K), so dass alle Kurse ein VgMW oder ein VgIP erhalten. Anschliesend wird das Index P=0° gesetzt und im Schritt (f) das Aufsummieren der im Schritt (e) gewonnenen Daten Vg(K) in zwei komplämentären 180°-Azimutsektoren S1, S2 so oft wiederholt, bis die mittlere Windrichtung im Schritt (h) resp. (i) ermittelt werden kann. Das ist dann der Fall, wenn die Teilsumme S1 maximal und S2 minimal wird. Zur Bestimmung der auf mittlere Fahrt bezogene Windgeschwindigkeit Vw/VL werden in den Schritten (j,k,) die Teilsummen S1, S2 der zwei komplementären 180° Azimutsektoren mit den Teilsummen der auf Fahrtgeschwindigkeit 1 bezogenen Idealfuktionen s1, s2 unter Gleichsetzen der Quotienten verglichen. Da die bezogene Vergleichfunktion die Summen aller Vektorenbeträge von 0...360° (beispielsweise 1 Vektor pro Grad) bildet, ist für den Vergleich (k) erforderlich, dass auch in der gemessenen Fuktionen alle Vektorbeträge 0...360° zur Verfügung stehen, was durch den Schritt (e) sichergestellt worden ist. Wenn Vw/VL betimmt ist, errechnet sich VL durch Proportionalität der Teilsummen S1 + S2 (für mittleres VL) zu den bezogenen s1+s2 (für VL=1), sowie Vw in den Schritten (l,m).
Entsprechend der Figur 6 kann die in Figur 2 gezeigte Berechnung für die Ermittlung der mittleren Fahrtgeschwindigkeit (True Air Speed) erweitert werden, weil zu jedem Vgi(t) als skalare Messgrösse VLi(t) miterfasst wird.

## Patentansprüche

1. Vorrichtung zur Ermittlung und Anzeige des Windvektors und der Fahrt eines Luftfahrzeuges, bestehend aus:
einer Einrichtung (1) zur Erzeugung von Signalen, die der geografischen Position und des Vektors der Grund-Geschwindigkeit entsprechen,
einer zweiten Einrichtung (2), wo diese Signale der Grund-Geschwindigkeit als Funktion der Zeit gespeichert werden,
einer dritten Einrichtung (3), in der der Betrag des Vektors der Grund-Geschwindigkeit als Funktion des Kurswinkels gespeichert ist,
einer vierten Einrichtung (4), zur Verarbeitung der Signale der vorgenannten Einrichtungen (1,2,3),
einer fünften Einrichtung (5), zur Steuerung der Signalverarbeitungseinrichtung (4) und einer Einrichtung (6), zur Anzeige der Daten.

2. Vorrichtung nach Anspruch 1, dadurch gekennzeichnet, dass für die Anzeigeeinrichtung (6) die azimutale Verteilung des Betrages des Grund-Geschwindigkeitsvektors und der Windgeschwindigkeitsvektor nach Betrag und Richtung ermittelt wird.

3. Vorrichtung nach den Ansprüchen 1 und 2, dadurch gekennzeichnet, dass für die Anzeigeeinrichtung (6) die azimutale Verteilung des Betrages der Grundgeschwindigkeit unter der Annahme einer mittleren konstanten Fahrtgeschwindigkeit ermittelt wird.

4. Vorrichtung nach den Ansprüchen 1 bis 3, dadurch gekennzeichnet, dass die Anzeigeeinrichtung (6) eine gestreckte Kompass-Skala (24) und eine kursabhängige Balkenanzeige (25) aufweist, deren Höhe dem Betrag der aktuellen Grund-Geschwindigkeit (25b) und deren Position dem Kurswinkel (25a) entspricht.

5. Vorrichtung nach den Ansprüchen 1 bis 4, dadurch gekennzeichnet, dass die Anzeige (6) eine gestreckte Kompass-Skala (24) sowie die Anzeige der azimutalen Verteilung des Betrages der mittleren Grund-Geschwindigkeit (26) aufweist.

6. Vorrichtung nach den Ansprüchen 1 bis 5, dadurch gekennzeichnet, dass die Anzeige (6) eine Windstärken-Anzeige (20) und eine gestreckte Kompass-Skala (24) sowie Anzeigebalken für die Richtungsanzeigen der Windrichtung (27) und Antiwindrichtung (28) aufweist.

7. Vorrichtung nach Anspruch 1, dadurch gekennzeichnet, dass zur Messung und Anzeige der Fahrtgeschwindigkeit (21) und der barometrischen Höhe (23) die Signalverarbeitungseinrichtung (4) auch Signale der Luftdatenerfassungseinrichtung (7) des statischen Luftdrucks (8) und des Staudrucks (9) verarbeitet.

8. Verfahren zur Ermittlung und Anzeige der Windgeschwindigkeit (20) und der Fahrtgeschwindigkeit (22) eines Luftfahrzeuges, dadurch gekennzeichnet, dass bei unterschiedlichem Kurs für eine Anzeigeeinrichtung (6) die azimutale Verteilung des Betrages des Grund-Geschwindigkeitsvektors und der Windgeschwindigkeitsvektor mit laufender Messung des Geschwindigkeitsvektors durch Satellitennavigation unter der Annahme einer mittleren konstanten Fahrtgeschwindigkeit ermittelt wird.
